# EUROPEAN PATENT APPLICATION

(11) **EP 3 399 128 A1**
(43) Date of publication of application: **07.11.2018**
(21) Application number: 17382252.9
(22) Date of filing: 05.05.2017
(51) Int. Cl.: E05F 11/48

(54) **METHOD FOR MOUNTING A PULLEY OF A WINDOW REGULATOR TO A PLASTIC RAIL AND ASSEMBLY OBTAINED**

(71) Applicant: Grupo Antolin Ingenieria, S.A.U., 09007 Burgos (ES)
(72) Inventor: GÓMEZ CÁMARA, David, 09007 BURGOS (ES); FRESNEDA GONZÁLEZ, Miguel Ángel, 09007 BURGOS (ES)
(74) Representative: Balder IP Law, S.L.

(57) **Abstract**

The assembly comprises a pulley (2), a plastic rail (1) and a bolt (3) for fixing the pulley (2) to the plastic rail (1) in an axial direction but allowing the rotation of the pulley (2) around the bolt (3). The bolt (3) comprises a threaded shaft (34), a shank (32), a shoulder (33), an annular groove (35), and a head (31). The assembly further comprises a metal sheet (4) with a central hole (41), such that when inserting the metal sheet (4) through the threaded shaft (34) of the bolt (3), which has been previously introduced in a through hole (11) of the plastic rail (1), the metal sheet (4) contacts partially with an support base (331) of the shoulder and partially with the plastic rail (1) such that when the metal sheet (4) is axially compressed against the support base (331), the diameter of the hole (41) of the metal sheet (4) becomes smaller than the diameter of the threaded shaft (34) and gets in the annular groove (35) of the bolt (3). The assembly further comprising a recess (12) in a second side of the plastic rail (1) for housing the metal sheet (4), the internal shape of the recess (12) being a non-circular shape to stop the metal sheet (4) from rotating around the bolt (3).

## Description

### TECHNICAL FIELD

The invention relates to systems for fixing pulleys to a plastic rail of a window regulator and for fixing the whole window regulator to the metallic structure of a vehicle door.

### STATE OF THE ART

It is known in the art to mount a pulley to the metallic rail of a window regulator by means of bolts or studs such that the pulley is axially fixed but can rotate around the bolt. Sometimes these bolts comprise an annular groove where the edges of the fixing hole of the rail get trapped supporting the axial forces. Then the rail with the pulley, cable and other elements is fixed to structure of a vehicle. The problem is that the pulling forces exerted by the driving cable upon the pulley are transmitted to the rail in the mounting point of the pulley and the rail is not able to support them. For reducing the force applied to the metallic rail in the point where the pulley is mounted is known to attach the rail to the metallic structure of the vehicle in the point of attachment of the pulley, sometimes with the same bolt or stud used to mount the pulley to the rail. With that attachment the forces generated by the driving cable are supported by the structure instead of the rail. Another problem is that the rotational movement of the driving cable around the pulley applies a torque to the bolt which can produce a rotation of the bolt in relation to the rail. For that reason the bolts or studs comprise ribs or protrusions that apply a friction force to the rail.

A solution of this kind is shown in EP-1078170-B1. This invention relates to a stud and a method for mounting a pulley on a metal rail or plate, for example for window regulators for the automotive industry. According to this invention, using a cold forming tool, the metal rail is pushed down until it abuts a shoulder of the stud and the upper portion of the stud is deformed pushing the edges of the hole of the metal plate into a groove of the stud such that the stud is firmly fitted into the metal plate thus preventing the axial movement of the stud and consequently of the pulley in relation to the metal plate.

A problem arises when using plastic rails for reducing the weight of the window regulator because the rail cannot be deformed as described in the patent and what is more important the plastic material of the rail cannot bear the axial forces exerted by the bolt

### DESCRIPTION OF THE INVENTION

A first aspect of the invention relates to an assembly for a window regulator comprising a pulley with an axial hole, a plastic rail with a through hole for the fixation of the pulley and a bolt for fixing the pulley to the plastic rail in an axial direction but allowing the rotation of the pulley around the bolt. In accordance with the invention the bolt comprises:
a threaded shaft with a diameter smaller than the diameter of the through hole of the plastic rail and smaller than the diameter of the axial hole of the pulley;
a head with a diameter greater than the diameter of the axial hole of the pulley holding the pulley in the axial direction;
a shank with a diameter smaller than the diameter of the axial hole of the pulley such that the pulley can rotate around the shank, but greater than the diameter of the hole of the plastic rail (in the operation of mounting the assembly, when introducing the bolt in the axial direction through the axial bore in the pulley and through the hole of the plastic rail, the shank passes through the axial bore of the pulley but cannot pass through the hole of the plastic rail) the shank comprising an annular flat base (a base orthogonal to the axial direction of the bolt such that when introducing the bolt in the axial direction through the hole of the plastic rail the support base of the shank rests on a first side of the plastic rail);
a shoulder with a diameter smaller than the diameter of the shank but greater than the diameter of the threaded shaft and smaller than the diameter of the through hole of the plastic rail, the shoulder comprising a support base; and
an annular groove between the treaded shaft and the support base of the shoulder, with a diameter smaller than the diameter of the threaded shaft (for preventing the bolt from moving in the axial direction in relation to the plastic rail as explained later).

According to the invention an axial length of the shoulder is smaller or equal to a thickness of the plastic rail (in an area surrounding the through hole of the plastic rail), such that the annular flat base of the shank rests on a first side of the plastic rail and the support base of the shoulder is aligned with a second side of the plastic rail, opposite to the first side (the shoulder remains housed inside the through hole of the plastic rail).

The assembly of the invention further comprises a metal sheet with a central hole with a final diameter smaller than the diameter of the shoulder such that the metal sheet abuts against the support base of the shoulder. The final diameter of the central hole is smaller than the diameter of the threaded shaft and is fitted in the annular groove. Thus the metal sheet cannot move axially in relation to the bolt. The center hole of the metal sheet has an initial diameter greater than the diameter of the threaded shaft such that the metal sheet can be introduced through the threaded shaft to mount the assembly of the invention but, applying a pressing force to the metal sheet, the metal sheet deforms and expands radially such that the final diameter of the center hole becomes smaller than the diameter of the threaded shaft. That means that the metal sheet has an initial diameter which permits the assembly of the metal sheet and the bolt and a final diameter, once assembled, which guarantees that the metal sheet cannot move in relation to the bolt.

The metal sheet has a minimum radial length greater than the diameter of the through hole of the plastic rail such that the plastic rail is fitted between the metal sheet and the annular flat base of the shank. The radial length defines the distance between the center of the central hole and the exterior border of the metal sheet and the minimum radial length being greater that the diameter of the hole guarantees that the exterior border or perimeter of the metal sheet abuts upon the plastic rail outside the through hole. Thus the plastic rail is sandwiched between the bolt and metal sheet and cannot move in axial direction in relation to the bolt. As the metal sheet cannot move axially in relation to the bolt, the assembly assures a mechanical linkage in the axial direction. Furthermore, the shape (shape of the exterior border) of the metal sheet matches a corresponding shape in the second side of the plastic rail, in an area surrounding the through hole, such that the rotation of the metal sheet is impeded. The shape of the metal sheet and plastic rail are designed such that when the metal sheets tries to rotate, the metal sheet collides with the plastic rail.

In some embodiments the assembly further comprises a recess in the second side of the plastic rail, surrounding the through hole, for housing the metal sheet. The internal shape of the recess being a non-circular shape and the metal sheet having a non-circular shape. Non circular shape means any polygonal shape such as triangular, square, rectangular, hexagonal, etc or even an elliptic or ovoid shape. In some alternative embodiments the metal sheet is mounted, in the recess, eccentric with the hole of the plastic rail. In that case the metal sheet and the recess can be circular shaped but mounted eccentrically so that the metal sheet cannot rotate inside de recess. In alternative embodiments the metal sheet comprises at least a hole fitted in a protrusion in the second side of the plastic rail. Thus the metal sheet cannot rotate around the bolt.

The metal sheet can comprise at least a lateral wing retained in a hole or protrusion of the plastic rail to improve the retention to the rotational movement of the metal sheet. The lateral wing can also improve the resistance of the rail to the efforts exerted on it.

In some embodiments the support base of the shoulder comprises at least an axial protrusion which is pressed against the metal sheet such that the bolt cannot rotate around the threaded shaft in relation to the plastic rail. The protrusions can comprise ribs, facets, toothed elements, studs or any other kind of elements that produce or increase in the friction force between the bolt and the metal sheet.

A second aspect of the invention relates to an assembly further comprising a vehicle metallic structure and a fixing nut connectable to the threaded shaft for fixing the plastic rail and pulley to the metallic structure.

A further aspect of the invention relates to a method for mounting (fixing) a pulley of a window regulator to a plastic rail comprising the steps of:
a) providing a through hole in the plastic rail;
b) placing the pulley over a first side of the plastic rail with an axial hole of the pulley aligned with the through hole of the plastic rail;
c) providing a bolt comprising
   a threaded shaft with a diameter smaller than the diameter of the through hole of the plastic rail;
   a shank with a diameter smaller than the diameter of the axial hole of the pulley such that the pulley can rotate around the shank, but greater than the diameter of the hole of the plastic rail, and comprising an annular flat base;
   a shoulder with a diameter smaller than the diameter of the shank but greater than the diameter of the threaded shaft and smaller than the diameter of the through hole of the plastic rail, the shoulder comprising a support base (orthogonal to the longitudinal axis of the bolt) and having an axial length smaller or equal to a thickness of the plastic rail (in an area surrounding the through hole of the plastic rail);
   an annular groove, between the threaded shaft and the support base of the shoulder, with a diameter smaller than the diameter of the threaded shaft; and
   a head with a diameter greater than the diameter of the axial hole of the pulley to hold the pulley in the axial direction;
d) providing a metal sheet with a minimum radial length greater than diameter of the through hole of the plastic rail and a central hole with an initial diameter smaller than the diameter of the shoulder and greater than the diameter of the threaded shaft and wherein the shape of the metal sheet matches a corresponding shape in the second side of the plastic rail (in an area surrounding the through hole of the plastic rail) to prevent the rotation of the metal sheet;
e) introducing the bolt through the axial hole in the pulley and through hole of the plastic rail until the annular flat base of the shank rests upon a first side of the plastic rail whilst the shoulder of the bolt remains housed inside the hole of the plastic rail and the support base of the shoulder remains aligned with a second side of the plastic rail, opposite to the first side;
f) inserting the metal sheet through the threaded shaft of the bolt until the metal sheet contacts partially with the support base of the shoulder and partially with the second side of the plastic rail;
g) using a suitable pressing tool, applying pressure between the head of the bolt and the metal sheet (such that the metal sheet is compressed between the pressing tool and the support base of the shoulder) to deform the metal sheet such that a final diameter of the center hole of the metal sheet becomes smaller than the diameter of the threaded shaft and an edge of the hole of the metal sheet gets fitted in the annular groove of the bolt. At the same time (an outer part of the metal sheet presses the plastic rail against the annular flat base of the shank) the plastic rail gets firmly fitted (sandwiched) between the metal sheet and the annular flat base of the shank. Thus the metal sheet, bolt and plastic rail are fixed therebetween, preventing the bolt from moving in the axial direction in relation to the plastic rail.

In some embodiments the method comprises providing on the second side of the plastic rail a recess where the metal sheet is housed in steps f) (and g), the internal shape of the recess being a non-circular shape and the metal sheet being non circular shaped or mounted eccentric with the hole of the plastic rail, to prevent the metal sheet from rotating around the bolt. In alternative embodiments the method comprises providing a metal sheet comprising at least a hole which is fitted in step f) (and g) in a protrusion in the second side of the plastic rail to prevent the metal sheet from rotating around the bolt.

The method can comprise providing a metal sheet with at least a lateral wing which is folded and retained in steps f) (and g) in a hole or protrusion of the plastic rail.

In some embodiments of the invention the method comprises providing axial protuberances (ribs) in the support base of the shoulder of the bolt which are pressed in step g) against the metal sheet to prevent the bolt from rotating around the threaded shaft.

Another aspect of the invention relates to a method further comprising (after step g) the step of introducing the threaded shaft of the bolt through a hole in a metallic structure of a vehicle and fixing the assembly constituted by the pulley and plastic rail to the metallic structure with a nut.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 is an exploded cross section of all the elements of the fixing assembly of the invention.
Figure 2 is a cross section of the pulley, bolt and metal sheet of the invention mounted on a plastic rail.
Figure 3 is an enlarged cross section of the bolt and metal sheet, showing anti-rotating protuberances in the bolt.
Figure 4 is a perspective of a rail with a pulley mounted, seen from the first side of the rail.
Figure 5 is a perspective of a rail with a pulley mounted, seen from the second side of the rail.

### DESCRIPTION OF A WAY OF CARRYING OUT THE INVENTION

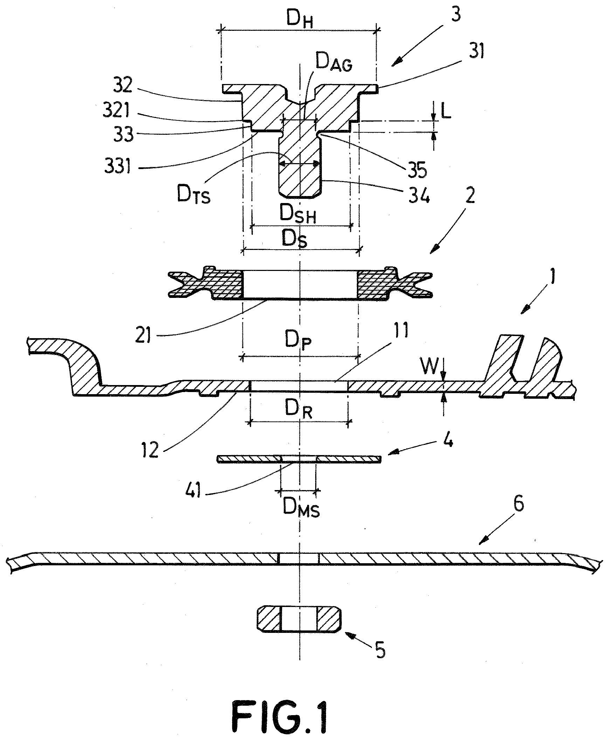

Figure 1 shows an exploded view of the assembly according to the invention which comprises:
- A plastic rail 1 with a through hole 11 with a dimeter Dr, an a recess 12;
- A pulley 2 with an axial hole 21 with a diameter Dp;
- A bolt 3 comprising a head 31 with a diameter Dh, a shank 32 with a diameter Ds, a shoulder 33 with a diameter Dsh, a threaded shaft 34 with a diameter Dts and an annular groove 35 with a diameter Dag;
- A metal sheet 4 with central hole 41 with an initial diameter Dmsi and a final diameter Dmsf, Dmsi being greater than Dmsf. After cold pressing the metal sheet 4 can expand and the initial diameter Dmsi of the central hole becomes a final diameter Dmsf smaller than Dmsi;
- A nut 5.

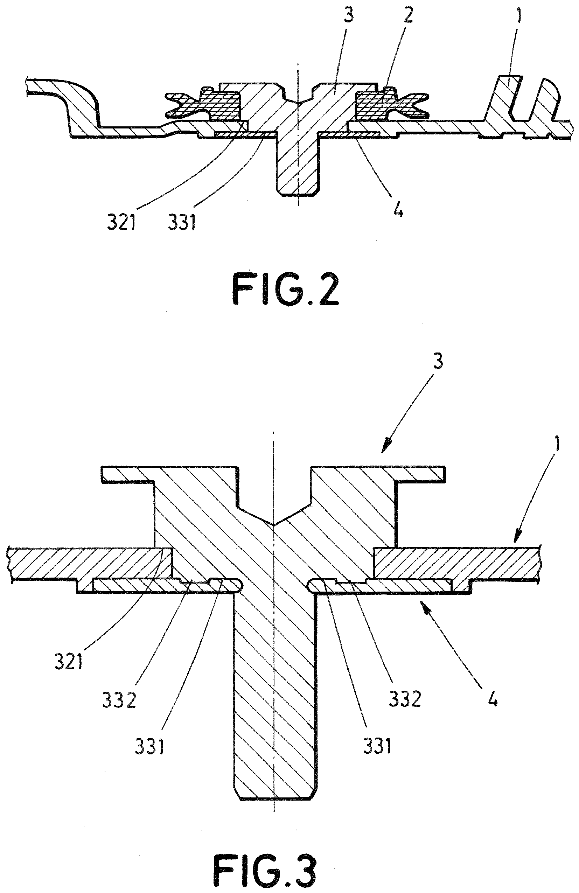

As can be seen in figure 1 Dh>Ds>Dsh>Dts>Dag. Dh is greater than Dp so that when the bolt 3 is introduced through the axial hole 21 of the pulley 2 the head 31 blocks the movement of the pulley 2 in the axial direction, but the pulley can rotate around the shank 32 because Ds is (slightly) smaller than Dp. This can be seen in figure 2.

Dsh is smaller than Ds so that an annular flat base 321 (orthogonal to the axis direction of the shaft) is formed between them and such that, when the bolt 3 is introduced through the hole 11 of the plastic rail 1, the annular flat base 321 of the shank 32 rests upon a first surface (the upper surface as represented in figure 2) of the plastic rail 1 and prevents the bolt 3 from passing completely through the hole 11 of the plastic rail 1.

Dts is smaller than Dsh so that a support base 331 (orthogonal to the axis direction of the shaft) is formed between them and the axial length L of the shoulder 33 is equal to the thickness W of the plastic rail 1 such that, when the bolt 3 is introduced through the hole 11 of the plastic rail 1, the support base 331 of the shoulder 33 is aligned with a second surface (the bottom surface as represented in figure 2) of the plastic rail 1, opposite to the first surface.

Dmsi is greater than Dts but smaller than Dsh, such that when inserting the metal sheet 4 through the threaded shaft 34 (which is already introduced in the hole 11 of the plastic rail 1) the metal sheet 4 partially contacts with the support base 331 of the shoulder 33 and partially with the plastic rail 1.

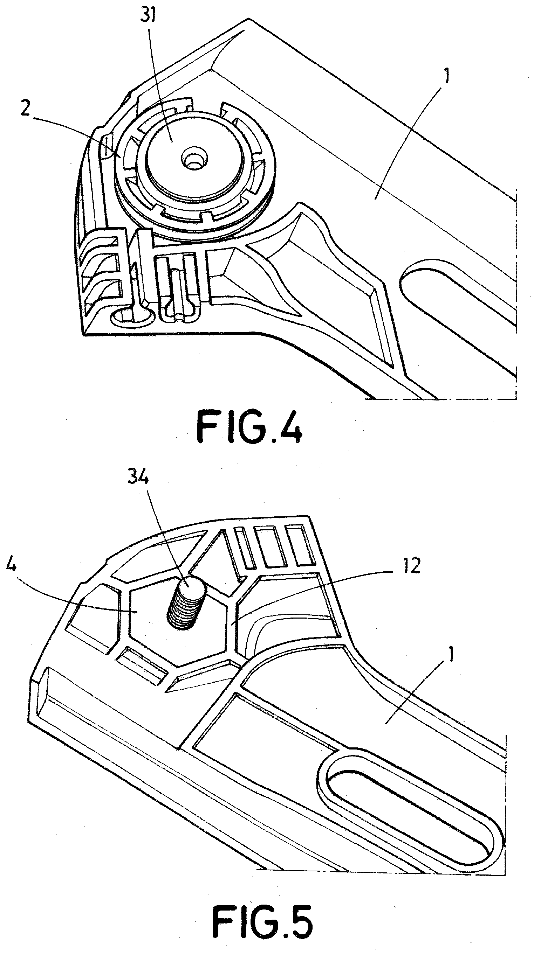

The metal sheet 4 shown in figure 5 has a non-circular external shape such that the metal sheet 4 fits in the recess 12 of the second side of the plastic rail 1 and prevents the metal sheet 4 from rotating around the bolt 3. In figure 5 the external shape of the metal sheet 4 is hexagonal and the recess 12 is also hexagonal. Obviously the shape of the metal sheet 4 can be square, pentagonal, octagonal or any other non-circular shape as long as the recess 12 has a similar shape in which the metal sheet 4 fits without possibility of rotating.

Dag is smaller than Dts and smaller than Dmsi but when a pressing force is applied between the head 31 and the metal sheet 4, a radial deformation (expansion) of the metal sheet 4 will provoke that the edges of the hole 41 of the metal sheet 4 enter into the annular groove 35 thus preventing the axial movement of the bolt 3 (the diameter of the central hole is reduced such that the final diameter Dmsf of the center hole is smaller than Dts). At the same time, as shown in figures 2 and 3, the plastic rail 1 gets firmly fitted between the outermost part of the metal sheet 4 and the annular flat base 321 of the shank 32.

As shown in figure 3, the support base 331 of the shoulder 33 comprises ribs 332 which are pressed against the metal sheet 4 preventing the rotation of the metal sheet 4 in relation to the bolt 3.

A nut 5 permits the fixing of the assembly (rail 1, pulley 2, bolt 3 and metal sheet 4) to a metallic structure 6 of a vehicle door.

According to the invention the mounting steps will be as follows:
a) placing the pulley 2 over a first side of the plastic rail 1 with the axial hole 21 of the pulley aligned with the through hole 11 of the plastic rail 1;
b) introducing the bolt 3 through the axial hole 21 and through hole 11 until the annular flat base 321 of the shank 32 collides and rests upon the first side of the plastic rail 1 whilst the shoulder 33 remains housed inside the through hole 11 and the support base 331 of the shoulder 33 remains aligned with the second side of the plastic rail 1.The threaded shaft 34 protrudes from the second side of the plastic rail 1 opposite to the first side;
c) inserting the metal sheet 4 through the threaded shaft 34 of the bolt 3 until the metal sheet 4 is placed inside the recess 12 of the plastic rail 1, remaining the metal sheet 4 partially in contact with the support base 331 of the shoulder 33 of the bolt 3 and partially in contact with the second side of the plastic rail 1;
d) using a suitable pressing tool, applying pressure between the head 31 of the bolt 3 and the metal sheet 4 to deform the metal sheet 4 pushing the edges of the hole 41 of the metal sheet 4 into the annular groove 35 of the bolt 3. Simultaneously the plastic rail 1 gets compressed between the metal sheet 4 and the annular flat base 321 of the shank 32. Thus, metal sheet 4, plastic rail 1, and bolt 3 (and pulley 2) are firmly fixed between them with no possibility of relative axial movement.

As a result of the mounting process an assembly as shown in figure 2 is obtained.

Further, the assembly obtained in step d) can be attached to a metallic structure (for example of a vehicle door) by means of a nut 5, screwed to the threaded shaft.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Assembly for a window regulator of a vehicle comprising
a plastic rail (1) with a through hole (11);
a pulley (2) with an axial hole (21);
a bolt (3) for fixing the pulley (2) to the through hole (11) of the plastic rail (1) in an axial direction but allowing the rotation of the pulley (2) around the bolt (3),
the bolt (3) comprising
a threaded shaft (34) with a diameter Dts smaller than the diameter Dr of the through hole (11) of the plastic rail (1) and smaller than the diameter Dp of the axial hole (21) of the pulley (2);
a head (31) with a diameter Dh greater than the diameter Dp of the axial hole (21) of the pulley (2) holding the pulley (2) in the axial direction;
a shank (32) with a diameter Ds smaller than the diameter Dp of the axial hole (21) of the pulley (2) such that the pulley (2) can rotate around the shank (32), but greater than the diameter Dr of the hole (11) of the plastic rail (1), the shank (32) comprising an annular flat base (321);
a shoulder (33) with a diameter Dsh smaller than the diameter Ds of the shank (32) but greater than the diameter of the threaded shaft (34) and smaller than the diameter Dr of the through hole of the plastic rail (1), the shoulder (33) comprising a support base (331) and
an annular groove (35), between the threaded shaft (34) and the support base (331) of shoulder (34), with a diameter Dag smaller than the diameter Dts of the threaded shaft (34),
**characterized in that** an axial length L of the shoulder (33) is smaller or equal to a thickness W of the plastic rail (1), such that the annular flat base (321) of the shank (32) rests on a first side of the plastic rail (1) and the support base (331) of the shoulder (33) is aligned with a second side of the plastic rail (1), opposite to the first side, and wherein the assembly further comprises
a metal sheet (4) with a minimum radial length R greater than the diameter Dr of the through hole (11) of the plastic rail (1) such that the plastic rail (1) is fitted between the metal sheet (4) and the annular flat base (321) of the shank (32),
the metal sheet (4) having a central hole (41) with a final diameter Dmsf smaller than the diameter Dsh of the shoulder (33) such that the metal sheet (4) abuts against the support base (331) of the shoulder (33), the final diameter Dmsf of the central hole (41) being smaller than the diameter Dts of the threaded shaft (34) such that the metal sheet (4) is fitted in the annular groove (35)
and wherein the shape of the metal sheet (4) matches a corresponding shape surrounding the through hole (11) in the second side of the plastic rail (1), such that the rotation of the metal sheet (4) is impeded.

2. Assembly as in claim 1 wherein the plastic rail (1) comprises a recess (12) in the second side of the plastic rail (1), surrounding the through hole (11), for housing the metal sheet (4), the internal shape of the recess (12) being a non-circular shape.

3. Assembly as in claim 1 wherein the plastic rail (1) comprises a recess (12) in the second side of the plastic rail (1), surrounding the through hole (11), for housing the metal sheet (4), the metal sheet (4) being mounted eccentric with the hole (11) of the plastic rail (1).

4. Assembly as in claim 1 wherein the metal sheet comprises at least a hole fitted in a protrusion in the second side of the plastic rail (1).

5. Assembly as in any of previous claims wherein the metal sheet (4) comprises at least a lateral wing retained in a hole or protrusion of the plastic rail (1).

6. Assembly as in any of previous claims, wherein the support base (331) of the shoulder (33) comprises at least an axial protrusion (332) which is pressed against the metal sheet (4) to prevent the bolt (3) from rotating around the threaded shaft (34).

7. Assembly as in previous claims further comprising a vehicle metallic structure (6) and a fixing nut (5) connectable to the threaded shaft (34) for fixing the plastic rail (1) and pulley (2) to the metallic structure (6).

8. Method for mounting a pulley (2) of a window regulator to a plastic rail (1) comprising the steps of:
a) providing a through hole (11) in the plastic rail (1);
b) placing the pulley (2) over a first side of the plastic rail (1) with the axial hole (21) of the pulley (2) aligned with the through hole (11) of the plastic rail (1);
c) providing a bolt (3) comprising
a threaded shaft (34) with a diameter Dts smaller than the diameter Dr of the through hole (11) of the plastic rail (1);
a shank (32) with a diameter Ds smaller than the diameter Dp of the axial hole (21) of the pulley (2) such that the pulley (2) can rotate around the shank (32), but greater than the diameter Dr of the hole (11) of the plastic rail (1) and comprising an annular flat base (321);
a shoulder (33) with a diameter Dsh smaller than the diameter Ds of the shank (32) but greater than the diameter Dts of the threaded shaft (34) and smaller than the diameter Dr of the through hole (11) of the plastic rail (1), the shoulder (33) comprising a support base (331) and having an axial length L smaller or equal to a thickness W of the plastic rail (1);
a annular groove (35), between the threaded shaft (34) and the support base (331) of shoulder (33), with a diameter Dag smaller than the diameter Dts of the threaded shaft (34) and
a head (31) with a diameter Dh greater than the diameter Dp of the axial hole (21) of the pulley (2) to hold the pulley (2) in the axial direction;
d) providing a metal sheet (4) with a minimum radial length R greater than diameter Dr of the through hole (11) of the plastic rail (1), the metal sheet (4) comprising a central hole (41) with an initial diameter Dmsi smaller than the diameter Dsh of the shoulder (33) and greater than the diameter Dts of the threaded shaft (34) and wherein the shape of the metal sheet (4) matches a corresponding shape, surrounding the through hole (11), in the second side of the plastic rail (1) to prevent the rotation of the metal sheet (4);
e) introducing the bolt (3) through the axial hole (21) in the pulley (2) and through hole (11) of the plastic rail (1) until the annular flat base (321) of the shank (32) rests upon a first side of the plastic rail (1) whilst the shoulder (33) of the bolt (3) remains housed inside the through hole (11) of the plastic rail (1), and the support base (331) of the shoulder (33) remains aligned with a second side of the plastic rail (1), opposite to the first side;
f) inserting the center hole (41) of the metal sheet (4) through the threaded shaft (34) of the bolt (3) until the metal sheet (4) contacts partially with the support base (331) of the shoulder (33) and partially with the second side of the plastic rail (1);
g) using a suitable pressing tool, applying pressure between the head (31) of the bolt (3) and the metal sheet (4) to deform the metal sheet (4) such that a final diameter Dmsf of central hole (41) becomes smaller than the diameter Dts of the threaded shaft (34) and an edge of the hole (41) of the metal sheet (4) gets fitted in the annular groove (34) of the bolt (3) and the plastic rail (1) gets firmly fitted between the metal sheet (4) and the annular flat base (321) of the shank (32).

9. Method as in claim 8, further comprising providing a recces (12), surrounding the through hole (11), on the second side of the plastic rail (1), where the metal sheet (4) is housed in step f), the internal shape of the recess (12) being a non-circular shape and the metal sheet (4) being non circular shaped.

10. Method as in claim 8, further comprising providing a recces (12), surrounding the through hole (11), on the second side of the plastic rail (1), where the metal sheet (4) is housed in step f), the metal sheet (4) being mounted eccentric with the hole (11) of the plastic rail (1), to prevent the metal sheet (4) from rotating around the bolt (3).

11. Method as in claim 8, comprising providing a metal sheet comprising at least a hole which is fitted in step f) in a protrusion in the second side of the plastic rail (1) to prevent the metal sheet (4) from rotating around the bolt (3).

12. Method as in any of previous claims comprising providing a metal sheet (4) with at least a lateral wing which is folded and retained in step f) in a hole or protrusion of the plastic rail (1).

13. Method as in any of previous claims further comprising providing axial protuberances (332) in the support base (331) of the shoulder (33) of the bolt (3) which are pressed against the metal sheet (4) in step g), to prevent the bolt (3) from rotating around the threaded shaft (34).

14. Method as in any of previous claims comprising a further step of introducing the threaded shaft (34) of the bolt (3) through a hole in a metallic structure (6) of a vehicle and fixing the assembly constituted by the pulley (2) and plastic rail (1) to the metallic structure (6) with a nut (5).
